Europäisches Patentamt

European Patent Office

Office européen des brevets

(19)

(11) Numéro de publication : **0 103 166**
**B1**

(12) **FASCICULE DE BREVET EUROPÉEN**

(45) Date de publication du fascicule du brevet :
03.12.86

(51) Int. Cl.⁴ : **F 16 N   7/34**

(21) Numéro de dépôt : **83107883.7**

(22) Date de dépôt : **10.08.83**

(54) **Appareil de pulvérisation d'un fluide, notamment d'un lubrifiant d'usinage.**

(30) Priorité : **18.08.82 CH 4935/82**

(43) Date de publication de la demande :
**21.03.84 Bulletin 84/12**

(45) Mention de la délivrance du brevet :
**03.12.86 Bulletin 86/49**

(84) Etats contractants désignés :
**AT DE FR IT SE**

(56) Documents cités :
**DE-A- 2 829 216**
**FR-A- 1 223 121**
**FR-E-    20 339**
**GB-A-   772 409**
**GB-A- 2 020 386**
**US-A- 3 618 709**

(73) Titulaire : **FLUIDAX S.A.**
**6, Route des Jeunes**
**CH-1227 Genève (Carouge) (CH)**

(72) Inventeur : **Devanthery, Antoine**
**35, Chemin des Semailles**
**CH-1212 Grand-Lancy (CH)**

(74) Mandataire : **Micheli, Michel-Pierre et al**
**MICHELI & CIE 118, Rue du Rhône Case Postale 47**
**CH-1211 Genève 6 (CH)**

EP 0 103 166 B1

Jouve, 18, rue St-Denis, 75001 Paris, France

## Description

La présente invention a pour objet un appareil de pulvérisation d'un fluide, notamment d'un lubrifiant d'usinage, comprenant au moins une buse de pulvérisation à laquelle sont acheminés le fluide à pulvériser, d'une part, et le fluide de propulsion de ce fluide, d'autre part.

Des appareils du type susmentionné sont connus dans lesquels l'alimentation de la buse de pulvérisation est assurée par deux conduits flexibles coaxiaux. Dans les appareils connus de ce type, le conduit flexible externe est traversé à son extrémité opposée à celle à laquelle il est fixé à la buse de pulvérisation par un passage radial menant au conduit coaxial interne. Il en résulte, notamment, que les deux conduits flexibles ne peuvent pas exercer un mouvement de rotation sur eux-mêmes à l'extrémité à laquelle ils sont reliés à l'appareil de pulvérisation.

La présente invention, outre la suppression de cet inconvénient vise à :

— assurer la rotation complète sur 360° des amenées respectives des deux fluides chacun pour soi à une buse de pulvérisation,

— éviter les pertes de charge inhérentes aux systèmes connus décrits ci-dessus,

— créer l'universalité d'utilisation d'un ensemble douille/raccord selon les revendications 1 et 2 pour l'amenée d'au moins un fluide à une buse de pulvérisation.

On connaît en outre du brevet FR 1 223 121 montrant le préambule de la revendication 1 un système de distribution de lubrifiant par pulvérisation qui nécessite l'acheminement par des conduits séparés non coaxiaux du lubrifiant et de son propulseur jusqu'à un ensemble de pulvérisation alimentant une seule buse. Ceci conduit à un réseau compliqué et encombrant de conduits.

Par rapport à ces systèmes de distribution, la présente invention a pour but de réaliser un appareil de distribution obviant aux inconvénients précités et permettant de surcroît :

— de délivrer à un seul corps l'air et le fluide, coaxialement à un nombre de buses déterminé par l'utilisateur,

— de recevoir et de délivrer les fluides coaxialement,

— de recevoir les fluides non coaxialement et de les distribuer à plusieurs buses coaxialement,

— de recevoir les fluides coaxialement, de les distribuer coaxialement à plusieurs buses et non coaxialement à un autre utilisateur,

— de distribuer sélectivement l'air ou le fluide.

Or, aucun de ces objectifs ne peut être obtenu par le dispositif décrit dans ledit brevet français.

Les buts précités sont atteints grâce aux moyens définis dans la revendication 1.

Le dessin annexé représente, à titre d'exemple, une forme d'exécution de l'objet de l'invention.

La figure 1 est une vue en perspective d'un appareil de pulvérisation de lubrifiant d'usinage, et

la figure 2 est une coupe d'un détail de cet appareil à l'échelle agrandie.

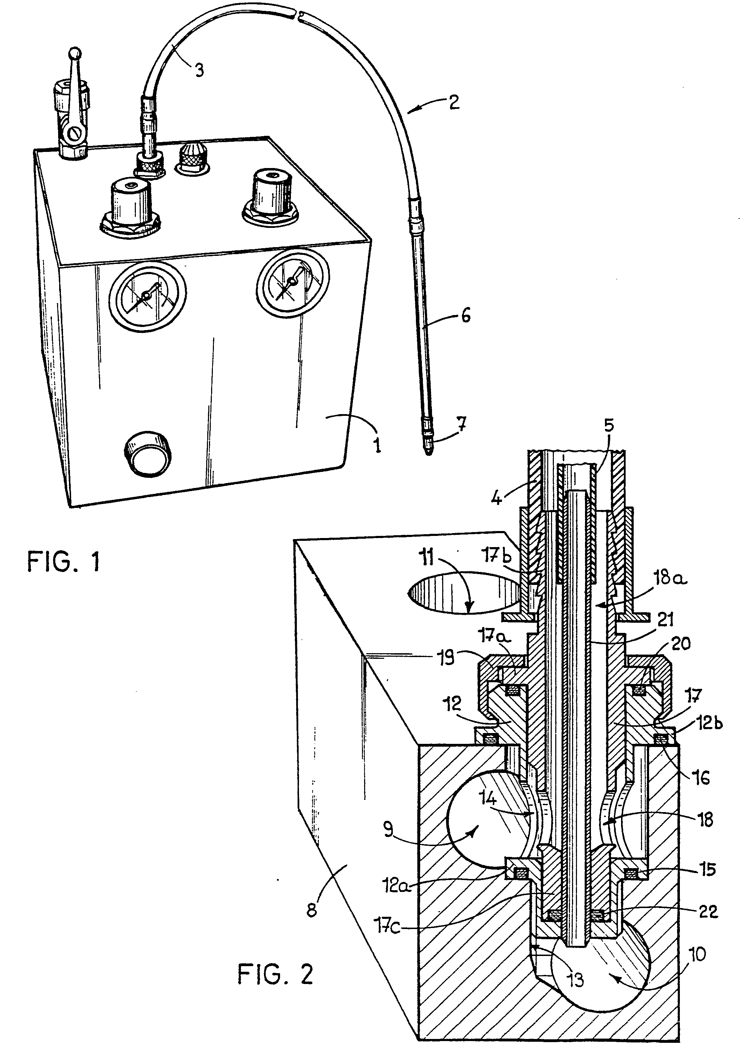

L'appareil représenté à la figure 1 comprend un boîtier 1 contenant ses divers éléments constitutifs, réservoir de fluide à pulvériser, détendeurs, dispositifs de commande, etc. qui ne seront pas décrits ici plus en détail, étant connus et étrangers à la présente invention.

Cet appareil comprend un flexible désigné d'une façon générale par 2, constitué par une gaine à blindage métallique souple 3 et par deux conduits coaxiaux 4 et 5 aboutissant au travers d'un corps rigide 6 à une buse de pulvérisation 7.

Le conduit externe 4 est destiné à acheminer le fluide à pulvériser, par exemple une huile de coupe émulsionnée par de l'eau, alors que le conduit interne 5 est destiné à acheminer le fluide de propulsion du fluide à pulvériser, par exemple de l'air comprimé.

L'appareil illustré comprend, logé à l'intérieur du boîtier 1, un corps parallélépipédique massif 8 dans lequel sont aménagés deux conduits 9 et 10 parallèles au grand axe du corps 8. Ce dernier présente un ou plusieurs perçages 11 perpendiculaires aux conduits 9 et 10 qui débouchent chacun dans le conduit 10 et mordent chacun tangentiellement sur le conduit 9. Il est à remarquer, à cet effet, que les axes des conduits 9 et 10 sont décalés latéralement par rapport au plan médian du corps 8 passant par les axes des multiples perçages perpendiculaires 11.

Le conduit 10 est relié à une alimentation de fluide de propulsion sous pression de par exemple 0,024 5 N/mm² (250 g/cm²), dans le cas d'une seule buse de pulvérisation, alors que le conduit 9 est relié au réservoir du fluide à pulvériser circulant sous une pression de l'ordre de 0,009 81 N/mm² (100 g/cm²) par exemple.

Le corps parallélépipédique massif 8 peut comporter un certain nombre de perçages perpendiculaires 11 accessibles de l'extérieur du boîtier 1. Un seul a été représenté au dessin. Chacun de ces perçages comprend une douille 12 se vissant par son extrémité filetée dans l'extrémité taraudée 13 du perçage perpendiculaire 11. Cette douille est percée de trous latéraux 14 qui se trouvent à hauteur du conduit 9 lorsque la douille 12 est en place dans le perçage perpendiculaire 11. Une garniture d'étanchéité 15 interposée entre un épaulement 12a de la douille et le corps 8 empêche toute fuite du fluide passant dans le conduit 10. De même, une garniture d'étanchéité 16 interposée entre un épaulement 12b de la douille 12 et le corps 8 empêche toute fuite du fluide passant dans le conduit 9.

Dans la douille 12 s'engage librement un raccord 17 qui est percé de trous latéraux 18 situés à hauteur du conduit 9 et débouchant à l'intérieur de la douille 12. Ce raccord 17 est maintenu en position dans la douille 12 par une bague de serrage 19 vissée sur ladite douille et qui prend appui sur un épaulement extérieur 17a du raccord. Une garniture d'étanchéité 20 est interposée entre la douille 12 et l'épaulement 17a du raccord 17 pour éviter toute fuite du fluide passant dans le conduit 9. Le raccord 17 se termine par un embout 17b sur lequel s'engage le conduit flexible 4. Enfin, le raccord 17 comporte un tube central 21 traversant le fond, désigné par 17c et débouchant dans le conduit 10, ce tube central traversant le raccord définit une chambre 18a coaxiale audit tube mais séparée de façon étanche de celui-ci. Une garniture d'étanchéité 22 interposée entre le raccord 17 et le tube 21 empêche toute fuite du fluide passant dans le conduit 10. Le conduit flexible 5 est engagé sur l'extrémité postérieure du tube 21.

Grâce à cette construction le fluide à pulvériser pénètre à l'intérieur du conduit flexible 4 provenant du conduit 9 par les trous latéraux 14 de la douille 12 et les trous latéraux 18 et la chambre 18a du raccord 17. Quant au fluide de propulsion du fluide à pulvériser, il pénètre dans le conduit flexible 5 provenant du conduit 10 directement par le tube 21.

L'utilisation d'une bague de serrage 19 à visser sur la douille 12 permet par le couple de serrage douille 12/épaulement 17a du raccord 17 d'assurer la rotation sur 360° et le blocage en position idéale de l'ensemble formé par le flexible 2 et le raccord 17 sur lequel il est monté.

La disposition des douilles 12 par rapport aux conduits 9 et 10 du corps parallélépipédique massif 8 dans celui-ci permet plusieurs perçages perpendiculaires 11 dans un même corps 8 sans pour autant entraîner des pertes de charge dans l'alimentation de plusieurs buses de pulvérisation disposées en batterie et travaillant simultanément. Des bouchons de construction analogue au raccord 17 et correspondant aux douilles 12 mais dont le fond n'est pas percé et qui ne présentent pas de trous latéraux 18 assurent l'obturation des conduits 9 et 10 du corps parallélépipédique massif 8 ensemble et chacun pour soi pour un perçage perpendiculaire 11 donné non utilisé.

Il est à remarquer que le corps parallélépipédique massif 8 peut être équipé de douilles aux caractéristiques de la douille 12 mais ne comportant pas de perçage en direction du conduit 10 dudit corps, alternativement de douilles aux caractéristiques de la douille 12 mais ne comportant pas de trous latéraux 14 en direction du conduit 9 dudit corps parallélépipédique massif 8. Grâce à ces douilles il est possible de capter à volonté grâce à un raccord 17 ne comportant pas de tube central 21 soit uniquement le fluide à pulvériser soit uniquement le fluide de propulsion du fluide à pulvériser.

Ces deux fluides pourront être acheminés par des conduits distincts, coaxiaux, à un corps parallélépipédique massif 8 disposé à distance de l'appareil représenté à la figure 1 et équipé de douilles 12 et menés à la buse de pulvérisation coaxialement au moyen du raccord 17. Un tel agencement peut se justifier dans le cas où le boîtier 1 de l'appareil doit être situé à une distance relativement grande de la zone de travail des buses de pulvérisation, ceci afin d'assurer un temps de réponse rapide de l'installation aux sollicitations de la commande incorporée dans l'appareil. Ce sera le cas par exemple lorsque plusieurs zones de travail situées à distance les unes des autres devront être pourvues en buses de pulvérisation reliées à un seul appareil.

Lorsque le corps massif 8 ne comporte qu'un perçage muni d'une douille 12 et recevant un raccord 17 les deux conduits ménagés dans ce corps peuvent ne pas être parallèles pour autant que ledit perçage intersecte les deux conduits.

En variante, la douille peut être fixée au corps massif par tout autre moyen qu'un filetage, elle peut par exemple être chassée dans le perçage du corps.

Dans une autre variante, la douille est venue d'une seule pièce de fabrication avec le corps massif. Dans une telle exécution, l'appareil ne comporte plus à proprement parler de douille, c'est la forme du corps massif et de son perçage perpendiculaire, formant un tout monolithique, qui est adaptée à recevoir le raccord qui dans cette exécution, comporte le tube central communiquant avec l'un des conduits du corps et une chambre coaxiale audit tube central communiquant avec l'autre conduit du corps. Des moyens sont prévus pour fixer le raccord sur le corps.

## Revendications

1. Appareil de distribution d'un fluide, notamment d'un lubrifiant d'usinage, comprenant au moins une buse (7) à laquelle sont acheminés coaxialement le fluide lubrifiant et/ou le fluide de propulsion de ce fluide, comportant un corps massif (8) muni de deux conduits (9, 10) destinés à être alimentés par des sources respectives desdits fluides et un raccord (17) destiné à être fixé de façon amovible dans ledit corps, comportant deux passages coaxiaux destinés à communiquer avec l'un et l'autre respectivement des conduits (9, 10) du corps et dont l'extrémité est reliée à la buse, caractérisé par le fait que ce corps (8) comporte plusieurs perçages (11) perpendiculaires aux conduits (9, 10) parallèles entre eux, ces perçages (11) débouchant dans l'un (10) des conduits et mordant tangentiellement dans l'autre (9), et par le fait qu'au moins un desdits perçages est agencé pour recevoir le raccord amovible.

2. Appareil suivant la revendication 1, caractérisé par le fait que dans chaque perçage du corps massif s'engage une douille (12) ; par le fait que cette douille (12) comporte au moins un trou latéral (ouverture) (14) débouchant dans l'un (9) desdits conduits (9, 10) ; et par le fait que le raccord (17) est fixé de façon amovible dans ladite douille (12).

3. Appareil suivant la revendication 2, caractérisé par le fait que la ou les ouvertures (14) de la douille (12) sont pratiquées dans sa paroi latérale à hauteur du premier conduit (9) dans lequel mord ledit perçage (11) assurant la liaison entre ce premier conduit (9) et l'intérieur de la douille (12), par le fait que le raccord (17) comporte un tube central (21) traversant le fond de la douille (12) et pénétrant dans le second conduit (10) du corps massif (8), et par le fait que le passage (18a) du raccord forme une chambre coaxiale au tube (21) central munie d'ouvertures (18) débouchant à l'intérieur de la douille (12), de manière que l'intérieur de ce tube (21) central et les ouvertures latérales (18) du raccord (17) conduisent les deux fluides séparément et coaxialement à la buse (7).

4. Appareil suivant la revendication 2, caractérisé par le fait que la ou les ouvertures (14) de la douille (12) sont pratiquées dans sa paroi latérale à hauteur du premier conduit (9) dans lequel mord ledit perçage (11) assurant la liaison entre ce premier conduit (9) et ledit passage (18a).

5. Appareil suivant la revendication 2, caractérisé par le fait que l'ouverture (14) de la douille (12) est pratiquée dans le fond de celle-ci assurant la liaison entre le second conduit (10), dans lequel le perçage (11) débouche, et le passage (18a) du raccord (17).

6. Appareil selon la revendication 1, caractérisé par le fait que le raccord (17) comporte un tube central (21) pénétrant dans le second conduit (10) du corps massif (8) ; et par le fait que le passage (18a) du raccord (17) forme une chambre coaxiale au tube central (21) munie d'ouvertures (18) débouchant à l'intérieur du perçage (11), de manière que l'intérieur de ce tube central (21) et les ouvertures latérales (18) du raccord (17) conduisent les deux fluides séparément et coaxialement à la buse (7).

**Claims**

1. Apparatus for delivering a fluid, particularly a machining lubricant, comprising at least one nozzel (7) to which are fed coaxially the lubricating and/or the propulsion fluid, comprising a monolithic body (8) provided with two ducts (9, 10) intended to be fed by respective sources of said fluids and a fitting (17) intended to be removably fixed in the said body, comprising two coaxial passageways intended to communicate with one and the other respectively of said ducts (9, 10) of the body and the end of which is connected to the nozzel, characterized by the fact that this body (8) comprises several parallel bores (11) perpendicular to the ducts (9, 10), these bores (11) ending in one (10) of the ducts and tangentially cutting the other (9), and by the fact that at least one of the said bores is adapted to receive the removable fitting.

2. Apparatus as claimed in claim 1, characterized by the fact that in each bore of the monolithic body a sleeve (12) is located ; by the fact that said sleeve (12) comprises at least one lateral hole (aperture) (14) ending in one (9) of the ducts (9, 10) ; and by the fact that the fitting (17) is fixed in a removable way in said sleeve (12).

3. Apparatus as claimed in claim 2, characterized by the fact that the aperture or apertures (14) of the sleeve (12) are provided in its lateral wall of the level of the first duct (9) which the said bore (11) cuts tangentially providing for the connection between this first duct (9) and the inside of the sleeve (12), by the fact that the fitting (17) comprises a central tube (1) going through the bottom of the sleeve (12) and penetrating in the second duct (10) of the monolithic body (8), and by the fact that the passageway (18a) of the fitting forms a chamber coaxial to the central tube (21) provided with openings (18) ending within the sleeve (12), so that the inside of said central tube (21) and the lateral openings (18) of the fitting (17) feed the two fluids separately and coaxially to the nozzel (7).

4. Apparatus according to claim 2, characterized by the fact that the aperture or the apertures (14) of the sleeve (12) are provided in its lateral wall at the level of the first duct (8) which is tangentially cut by the bore (11) providing the connection between this first duct (9) and the said passageway (18a).

5. Apparatus according to claim 2, characterized by the fact that the aperture (14) of the sleeve (12) is provided in its bottom providing for the connection between the second duct (10), in which the bore (11) ends, and the passageway (18a) of the fitting (17).

6. Apparatus according to claim 1, characterized by the fact that the fitting (17) comprises a central tube (21) ending in the second duct (10) of the monolithic body (8) ; and by the fact that the passageway (18a) of the fitting (17) forms a chamber coaxial to the central tube (21) provided with openings (18) leading within the bore (11) so that the inside of said central tube (21) and the lateral openings (18) of the fitting (17) feed the two fluids separately and coaxially to the nozzle (7).

**Patentansprüche**

1. Gerät zum Verteilen eines Fluids, insbesondere eines Schmiermittels für die spanabhebende Bearbeitung, umfassend wenigstens eine Spritzdüse (7), der koaxial das Schmierfluid und/oder das Treibfluid für diesen Fluid zugeführt wird, umfassend einen massiven Körper (8), der mit zwei Leitungen (9, 10) versehen ist, die dazu bestimmt sind, von den jeweiligen Quellen der genannten Fluide gespeist zu werden und ein Paßstück (17), das dazu bestimmt ist, lösbar im genannten Körper befestigt zu werden und das zwei koaxiale Durchlässe aufweist, die dazu bestimmt sind, mit jeweils der einen oder der anderen Leitung (9, 10) des Körpers zu kommunizieren und dessen Ende mit der Spritzdüse verbunden ist, dadurch gekennzeichnet, daß der Körper (8) eine Mehrzahl von Perforationen (11) besitzt, die senkrecht zu den Leitungen (9, 10) parallel zueinander stehen, daß diese Perforationen (11) in eine der Leitungen (10) münden und tangential in die andere Leitung (9) eingreifen, und daß wenigstens eine der genannten Perforationen dazu ausgebildet ist, das lösbare Paßstück aufzunehmen.

2. Gerät nach Anspruch 1, dadurch gekennzeichnet, daß in jede Perforation des massiven Körpers eine Hülse (12) eingreift ; daß diese Hülse (12) wenigstens ein seitliches Loch (eine Öffnung) (14) aufweist, das (die) in die Leitung (9) der genannten Leitungen (9, 10) mündet und daß das Paßstück (17) lösbar in der genannten Hülse (12) befestigt ist.

3. Gerät nach Anspruch 2, dadurch gekennzeichnet, daß die Öffnung(en) (14) der Hülse (12) in ihrer seitlichen Wand auf der Höhe der ersten Leitung (9) ausgebildet ist (sind), in die die genannte Perforation (11) eingreift und die Verbindung zwischen dieser ersten Leitung (9) und dem Inneren der Hülse (12) gewährleistet, daß das Paßstück (17) ein zentrales Rohr (21) besitzt, das den Boden der Hülse (12) durchsetzt und in die zweite Leitung (10) des massiven Körpers (8) eindringt und daß der Durchlaß (18a) des Paßstückes eine sich koaxial zum zentralen Rohr (21) erstreckende mit Öffnungen (18) versehene Kammer bildet, die in das Innere der Hülse (12) münden, so daß das Innere dieses zentralen Rohres (21) und die seitlichen Öffnungen (18) des Paßstückes (17) die beiden Fluide getrennt und koaxial zur Spritzdüse (7) führen.

4. Gerät nach Anspruch 2, dadurch gekennzeichnet, daß die Öffnung(en) (14) der Hülse (12) in ihrer seitlichen Wand auf der Höhe der ersten Leitung (9) ausgebildet ist (sind), in die die genannte Perforation (11) eingreift und die Verbindung zwischen dieser ersten Leitung (9) und dem genannten Durchlaß (18a) gewährleistet.

5. Gerät nach Anspruch 2, dadurch gekennzeichnet, daß die Öffnung (14) der Hülse (12) im Boden derselben ausgebildet ist und die Verbindung zwischen der zweiten Leitung (10), in die die Perforation (11) mündet, und dem Durchlaß (18a) des Paßstückes (17) gewährleistet.

6. Gerät nach Anspruch 1, dadurch gekennzeichnet, daß das Paßstück (17) ein zentrales Rohr (21) aufweist, das in die zweite Leitung (10) des massiven Körpers (8) eindringt ; und daß der Durchlaß (18a) des Paßstückes (17) eine sich koaxial zum zentralen Rohr (21) erstreckende Kammer bildet, die mit Öffnungen (18) versehen ist, die in das Innere der Perforation (11) auf solche Weise münden, daß das Innere dieses zentralen Rohres (21) und die seitlichen Öffnungen (18) des Paßstückes (17) die beiden Fluide getrennt und koaxial zur Spritzdüse (7) führen.

FIG. 1

FIG. 2